# EUROPEAN PATENT SPECIFICATION

(11) **EP 4 166 778 B1**
(45) Date of publication and mention of the grant of the patent: **03.12.2025**
(21) Application number: 21290065.8
(22) Date of filing: 14.10.2021
(51) Int. Cl.: F02M 35/10, B29C 65/00

(54) **PLASTICS BODY AND METHOD FOR MANUFACTURING THE SAME**
KUNSTSTOFFKÖRPER UND VERFAHREN ZUR HERSTELLUNG DAVON
CORPS EN MATIÈRE PLASTIQUE ET SON PROCÉDÉ DE FABRICATION

(43) Date of publication of application: 19.04.2023
(73) Proprietor: MANN+HUMMEL GmbH, 71636 Ludwigsburg (DE)
(72) Inventor: Preux, Thomas, 53810 Change (FR); Warnery, Stéphane, 53970 L'Huisserie (FR); Foulboeuf, Gwenael, 53260 Entrammes (FR)
(74) Representative: Mann + Hummel Intellectual Property

(56) References cited:
- EP-B1- 1 158 159
- DE-A1- 102012 208 841
- US-A- 5 575 249
- US-A- 5 642 697
- US-A1- 2005 005 890
- US-A1- 2006 016 416
- US-B1- 6 234 131
- US-B2- 10 465 639

## Description

### Technical Field

The invention relates to a plastics body comprising internal fluid ducts within a housing, in particular a housing with two housing shells and at least one inlay between the housing shells for defining fluid ducts inside the housing and to a method for manufacturing the same.

### Prior Art

US 6,021,753 discloses a bonded multi-piece plastic automotive air intake assembly having first and second housing members that include a 3-dimensional mating surface. The first member has a continuous first perimeter edge and the second member has a continuous second perimeter edge. The first perimeter edge has a central tongue portion that extends outwardly from the first edge. The tongue portion has first and second wall surfaces. The second peripheral edge has a groove extending inwardly from the second peripheral edge and mates with the tongue portion. The tongue portion and groove form a U-shaped channel that receives an adhesive therebetween. The adhesive forms a continuous bead that seals the channel between the first and second housing members. A plurality of alignment spacers are positioned between the tongue portion and the groove to align the tongue portion centrally within the groove.

US 6,234,131 B1 discloses a composite air intake manifold assembly adapted for use with an internal combustion engine. The composite air intake manifold assembly includes an upper half shell formed from a polymer, a lower half shell formed from a polymer and joined to the upper half shell to define a housing having an internal cavity, and an inner shell formed from a polymer and disposed within the cavity. The insert in combination with the upper half shell and the lower half shell cooperate to define at least a pair of spaced apart generally cylindrical shaped air intake runners. Each of the runners includes an opened air intake end adapted to receive atmospheric air, and an opened air inlet end adapted to be connected to an associated an air inlet side of a cylinder head of the internal combustion engine. Each of the runners includes a continuous uninterrupted weld joint along substantially an entire peripheral edge thereof to provide a sealed fluid path from the opened air intake end to the opened air inlet end of the runner and prevent air leakage between adjacent runners.

US 6 234 131 B1 discloses a composite air intake manifold assembly for use with an internal combustion engine which includes an upper half shell formed from a polymer, a lower half shell formed from a polymer and joined to the upper half shell to define a housing having an internal cavity, and an inner shell formed from a polymer and disposed within the cavity. The insert in combination with the upper half shell and the lower half shell cooperate to define at least a pair of spaced apart generally cylindrical shaped air intake runners. Each of the runners includes an opened air intake end adapted to receive atmospheric air, and an opened air inlet end adapted to be connected to an associated an air inlet side of a cylinder head of the internal combustion engine. Each of the runners includes a continuous uninterrupted weld joint along substantially an entire peripheral edge thereof to provide a sealed fluid path from the opened air intake end to the opened air inlet end of the runner and prevent air leakage between adjacent runners whereby a generally uniform air supply is maintained to each associated cylinder head of the internal combustion engine.

US 5 575 249 A discloses a plastic intake manifold assembly for an internal combustion engine, and a method for its production. The assembly is in the form of a hollow plastic structure composed of two housing pieces in which a resonance chamber cross section is formed by means of an insert in the housing interior. Mating surfaces on the housing pieces are bonded together, for example by friction welding or ultrasonic welding.

US 10 465 639 B2 is another known example of a plastic intake manifold.

### Disclosure of the Invention

It is an object of the invention to provide a plastics body with reduced effort in manufacturing the plastics body.

Another object is to provide a method for manufacturing such a plastics body.

The object is achieved according to one aspect of the invention by a plastics body as defined in claim 1.

The other object is achieved by a method for manufacturing a plastics body according to claim 4.

The other claims, the description and the drawings describe advantageous embodiments of the invention.

According to one aspect of the invention a plastics body is proposed comprising a housing and at least one inlay mounted in the housing, where in a mounted state the housing and the at least one inlay are configured to provide at least one internal fluid duct inside the housing, the housing comprising at least two shells, where the at least one inlay comprises a first sealing contour which is integral with the at least one inlay and at least one shell comprises a second sealing contour which is integral with the at least one shell where the at least one inlay and the at least one shell are connected by a sealing interface, where the sealing interface is formed by the first sealing contour and the second sealing contour being in direct contact with each other, the sealing function between the at least one shell and the at least one inlay being integrated in the specific design of the at least one inlay and the at least one shell of the housing.

Advantageously, the sealing function between the shells and inlays is integrated in the specific design of inlays and shells of the housing. There is no need of additional manufacturing steps such as welding etc. for assembling the inlays in the plastics body. No additional components or materials are needed for establishing a sealing function between the shell and inlays. This allows for avoiding other components such as gaskets, screws, adhesives and the like and offers a compact arrangement and cost effective solution due to a reduced number of manufacturing steps in a production line. The integration of inlays in the housing without welding or additional components or material in the plastics body allows to reduce the construction space of the plastics body. In particular in automotive applications where construction space is limited, the free area saved can be used for other functions.

The inventive plastics body may favorably be configured as an automotive component. The inventive plastics body may favorably be configured as an air intake manifold. The inventive plastics body may favorably be configured as a humidifier, in particular as a humidifier for a fuel cell system. The inventive plastics body may favorably be configured as an oil module. With the sealing function being integrated into the design of shells and inlays, it is possible to achieve an improved acoustics behavior of the plastics body as well as an improved volumetric efficiency.

It is to be understood that the inventive plastics body may be configured as a non-automotive component.

According to the invention of the plastics body the first sealing contour is made of the same material as the at least one inlay and the second sealing contour is made of the same material as the at least one shell. No additional components or materials need to be used.

According to the invention of the plastics body the sealing interface comprises a labyrinth contour. The labyrinth contour improves the sealing function of the sealing interface.

Advantageously, an aspect ratio of the labyrinth contour can be easily adapted to the intended use of the plastics body. The shapes of the sealing contours with their specific design can provide a good tightness between each of the fluid ducts.

According to the invention of the plastics body the sealing interface comprises a rib and a receptacle for the rib. This results in a space efficient sealing interface between the shell and the inlay. Advantageously, an aspect ratio of the rib and receptacle can be easily adapted to the intended use of the plastics body. The shapes of the sealing contours with their specific design can provide a good tightness between each of the fluid ducts. The shapes of the sealing contours further may easily be adapted to being manufactured by injection molding processes.

According to an advantageous embodiment of the plastics body a sealing interface is provided between two inlays having corresponding sealing contours, each sealing contour being integral with the respective inlay and forming a sealing interface by directly contacting each other. Advantageously, a sealing function between the internal fluid ducts inside the housing can be improved. The shapes of the sealing contours with their specific design can provide a good tightness between each of the fluid ducts. No additional gasket is needed for providing the sealing function between the two inlays.

According to an advantageous embodiment of the plastics body one of the sealing contours may comprise an overmolded lip. Advantageously, an aspect ratio of the lip can be easily adapted to the intended use of the plastics body.

According to the invention of the plastics body the sealing interface is free of a gasket and/or an adhesive and/or a weld seam. No additional components or materials are needed for establishing a sealing function between the shell and inlays.

According to an advantageous embodiment of the plastics body the shells of the housing may be connected by a weld seam. In case of two shells, a single weld seam between the shells is sufficient for closing and sealing the housing of the plastics body as well as the internal fluid ducts the sealing function of which is established simply by pressing the shells and inlays together. In particular, the welding of the shells can be achieved by welding from the outside of the housing. Alternatively, the shells can be connected to each other by other means such as screws, rivets, clamps, adhesive or the like.

According to an advantageous embodiment of the plastics body the shells and the at least one inlay may be manufactured by injection molding. Although the assembled plastics body has an intrinsic complex shape with internal fluid ducts, the demolding procedure of the shells and inlays is facilitated.

In another embodiment of the invention, a sealing interface comprises an overmolded rip or lip arranged at an inlay or a shell. In this embodiment, an elastomer can be overmolded to the at least one sealing contour. The soft elastomer of the overmolded lip is pressed against a corresponding sealing contour during the welding of the shells of the housing.

In another advantageous embodiment, the at least one inlay part and the at least one sealing rib, in particular a sealing lip, are made of a soft material, in particular polyamide material without filling, in particular without glass fiber filling. The at least one rib is manufactured integrally with the inlay part. The at least one sealing rib is flexible to make a good contact with the corresponding sealing contour of a shell during welding of the shells of the housing.

According to another aspect of the invention, a method for manufacturing a plastics body is proposed, the plastics body comprising a housing and at least one inlay mounted in the housing, where in a mounted state the housing and the at least one inlay are configured to provide at least one internal fluid duct inside the housing, the method comprising providing at least one inlay comprising a first sealing contour being integral with the at least one inlay; providing shells of the housing providing a second sealing contour being integral with at least one of the shells; positioning the at least one inlay in at least one of the shells of the housing or to another inlay, the sealing function between the at least one shell and the at least one inlay being integrated in the specific design of the at least one inlay and the at least one shell of the housing; closing the shells; connecting the two shells by welding the shells.

Advantageously, the sealing function between the shells and inlays is integrated in the specific design of inlays and shells of the housing. There is no need of additional manufacturing steps such as welding etc. for assembling the inlays in the plastics body. This allows for avoiding other components such as gaskets, screws, adhesives and the like and offers a compact arrangement and cost effective solution due to a reduced number of manufacturing steps in a production line. The integration of inlays in the housing without welding or additional components or material in the plastics body allows to reduce the construction space of the plastics body. In particular in automotive applications where construction space is limited, the free area saved can be used for other functions.

According to an advantageous embodiment the shells of the housing can be welded from the outside of the housing.

### Brief Description of the Drawings

The present invention together with the above-mentioned and other objects and advantages may best be understood from the following detailed description of the embodiments, but not restricted to the embodiments, wherein is shown in:
- Figure 1: in an exploded view a plastics body according to an embodiment of the invention comprising housing shells and inlays;
- Figure 2: in a cut view the plastics body of Figure 1 in an assembled state comprising internal fluid ducts in the housing;
- Figure 3: in a cut view a detail of fluid ducts of the plastics body of Figure 1 in an assembled state featuring internal sealing interfaces between a shell and an inlay;
- Figure 4: the detail of Figure 3 with shell and inlay disassembled;
- Figure 5: in a cut view a labyrinth contour according to another embodiment of the invention;
- Figure 6: in a cut view a labyrinth contour according to another embodiment of the invention;
- Figure 7A: in a cut view a sealing interface with an overmolded lip according to another embodiment of the invention before assembly,
- Figure 7B: in a cut view as Figure 7B after assembly,
- Figure 8A: in a cut view a sealing interface with ribs according to another embodiment of the invention before assembly,

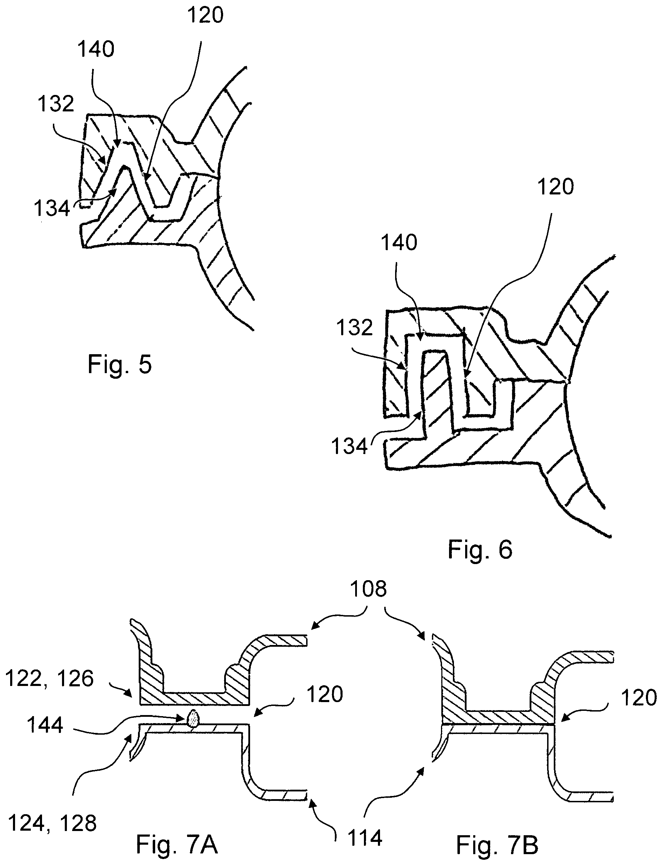

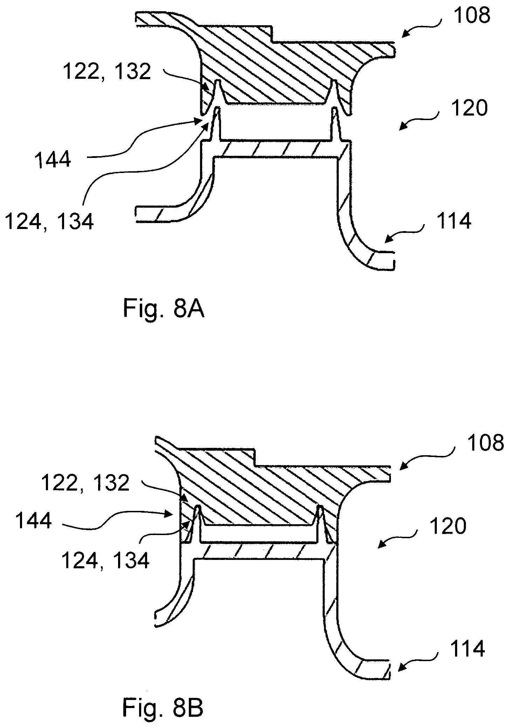

- Figure 7B: in a cut view as Figure 8B after assembly.

### Detailed Description of the Drawings

In the drawings, like elements are referred to with equal reference numerals. The drawings are merely schematic representations, not intended to portray specific parameters of the invention. Moreover, the drawings are intended to depict only typical embodiments of the invention and therefore should not be considered as limiting the scope of the invention.

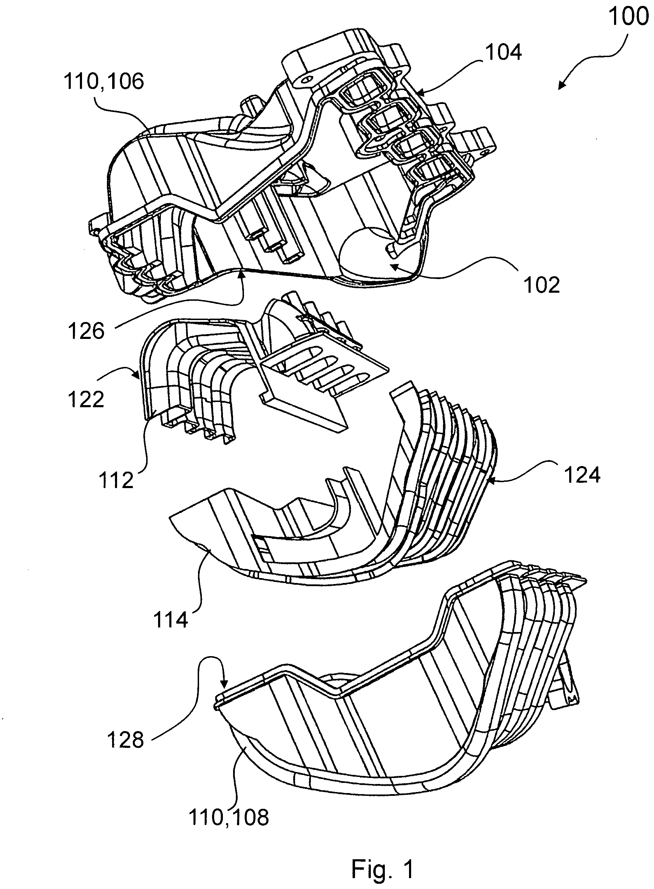

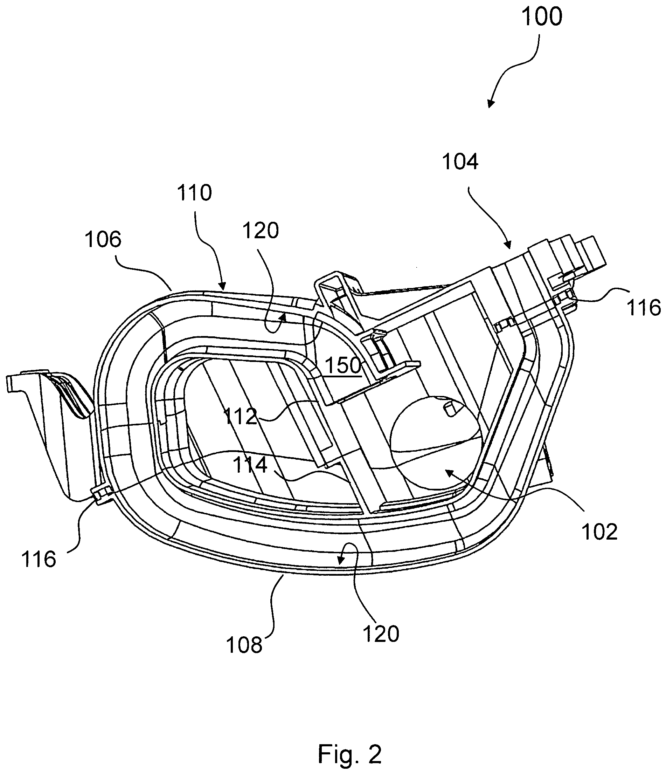

Figure 1 depicts in an exploded view a plastics body 100 according to an embodiment of the invention comprising, for instance, two shells 106, 108 of a housing 110 and, for instance, two inlays 112, 114. Figure 2 shows in a cut view the plastics body 100 of Figure 1 in an assembled state comprising internal fluid ducts in the housing 110.

The invention is described for a plastics body 100 configured as an air intake manifold. It is to be understood that the invention is not limited to such an application of the plastics body 100.

The shells 106, 108 and the at least one inlay 112, 114 of the plastics body 100 may be manufactured by injection molding.

Figure 2 shows in a cut view the plastics body 100 of Figure 1 in an assembled state comprises internal fluid ducts 150 in the housing 110. The shells 106, 108 and the inlays 112, 114 comprise corrugated structures which result in this embodiment, when the shells 106, 108 and inlays 112, 114 are mounted together, in four parallel fluid ducts 150 located inside the housing 110. The fluid ducts extend between an inlet 102 and an outlet 104 which, in this embodiment, is a manifold of four exits, one for each fluid duct 150.

In this embodiment, air enters through the inlet 102 into a larger volume where it can expand which has a beneficial acoustic effect. The air is then guided into the four parallel fluid ducts 150 and leaves the housing through the exit manifold at the outlet 104.

The inlay 112 comprises a first sealing contour 122 which is integral with the least one inlay 112, while part 114 comprises a first sealing contour 124. The shell 106 comprises a second sealing contour 126 which is integral with the shell 106 and the shell 108 comprises a second sealing contour 128 which is integral with the shell 108.

The sealing contours 122, 124, 126, 128 are arranged at portions of the inlays 112, 114 and the shells 106, 108, respectively, which are intended for making contact with each other when the shells 106, 108 are brought into contact.

When the inlays 112, 114 are in contact with the shells 106, 108, a sealing interface 120 is formed between the sealing contours 122, 124 of the inlays 112, 114 and the sealing contours 126, 128 of the shells 106, 108 by pressing all components together.

The sealing contours 122, 124, 126, 128 may be configured with a snap fitting action to maintain the internal inlays 112, 114 in position while the shells 106, 108 are connected to each other by, e.g., a weld seam 116.

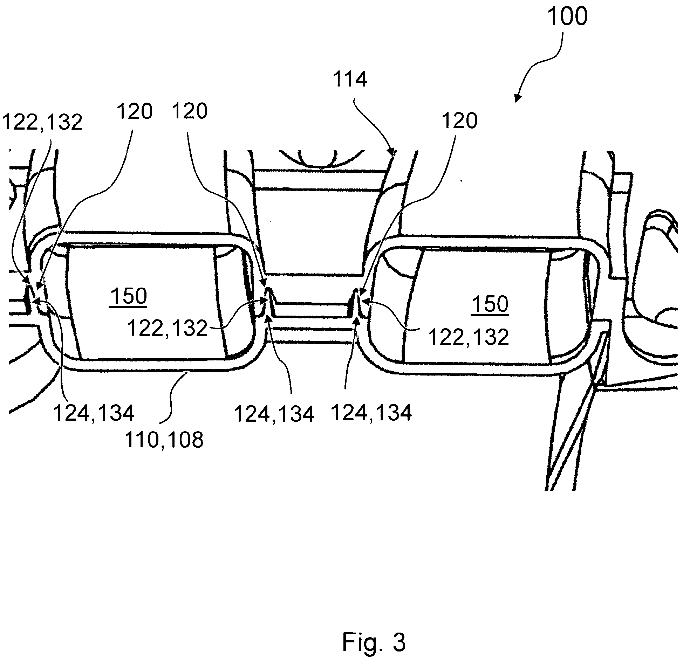

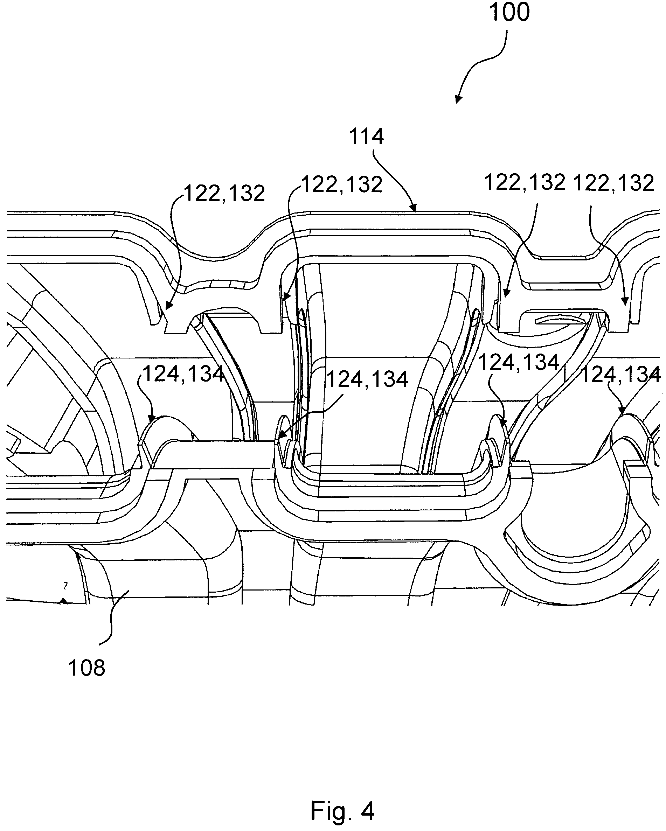

Figure 3 shows in a cut view a detail of fluid ducts 150 of the plastics body 100 of Figure 1 in an assembled state featuring internal sealing interfaces 120 between a shell 108 and an inlay 114. Figure 4 shows the detail of Figure 3 with shell 108 and inlay 114 disassembled.

The sealing interface 120 comprises a rib 134 arranged at the shell 108 and a receptacle 132 for the rib 134 arranged at the inlay 114 being in close, direct contact with each other. The sealing contours 122, 124 and 126, 128 extend along the extension of the fluid ducts 150 tightly sealing the fluid ducts 150 in the housing 110.

In this embodiment, the first sealing contours 122, 124, i.e. the rib 132, of the inlays 112, 114 are made of the same material. Likewise, the second sealing contours 126, 128 of the shells 106, 108 are made of the same material as the shells 106, 108.

Of course, in an alternative embodiment not shown, the rib 134 may be arranged at the shell 108 and the receptacle 132 for the rib 134 may be arranged at the inlay 108.

According to the invention the sealing interface 120 is free of a gasket and/or an adhesive and/or a weld seam.

The embodiments in Figures 5 to 7 depict some variations of sealing contours between shells and inlays.

Figure 5 shows in a cut view a labyrinth contour 140 according to another embodiment of the invention. Figure 6 shows in a cut view a labyrinth contour 140 with a multitude of subsequent interdigitated ribs 134 and receptacles 132 according to another embodiment of the invention. Depending on the requirements for the intended use of the plastics body and/or depending on manufacturing processes, an aspect ratio for the meandering sealing interface 120 can be easily adjusted by providing more or less steep meander of the labyrinth contour 140.

Figures 7A and 7B show in a cut view a sealing interface 120 with an overmolded lip 144 arranged at an inlay 112, 114 or a shell 106, 108 according to another embodiment of the invention. In this embodiment, an elastomer can be overmolded to the sealing contour 122, 124, 126, 128. The soft material of the overmolded lip 144 is pressed against the corresponding sealing contour 126, 128, 122,124 during the welding effort applied on the external shells 106, 108.

Figures 8A and 8B show another embodiment with the inlay part 112, 114 and the sealing rib 134, in particular a sealing lip, made of a soft material, in particular Polyamide material without filling, in particular without glass fiber filling. The at least one sealing rib 134 is flexible to make a good contact with the corresponding sealing contour of a shell 106, 108 when the welding effort is applied on the external shells 106, 108.

According to the invention the sealing interface 120 is free of a separate gasket and/or an adhesive and/ or a weld seam.

In an advantageous method for manufacturing a plastics body 100 as defined above, where the plastics body 100 comprises a housing 110 and at least one inlay 112, 114 mounted in the housing 110, where in a mounted state the housing 110 and the at least one inlay 112, 114 are configured to provide at least one internal fluid duct 150 inside the housing 110, the method comprises the steps
- providing at least one inlay 112, 114 comprising a first sealing contour 122, 124 being integral with the at least one inlay 112, 114;
- providing shells 106, 108 of the housing 110 providing a second sealing contour 126, 128 being integral with at least one of the shells 106, 108;
- positioning the at least one inlay 112, 114 in at least one of the shells 106, 108 of the housing 110 or to another inlay 112, 114;
- closing the shells 106, 108;
- connecting the two shells 106, 108, in particular by welding the shells 106, 108.

The sealing function is favorably integrated in the specific design of the shells and the inlays so that there is no need of an additional welding to assemble it in the plastics body 100.

### Reference Numbers

- 100: Plastic body
- 102: inlet
- 104: outlet manifold
- 106: shell
- 108: shell
- 110: housing
- 112: inlay
- 114: inlay
- 116: weld seam
- 120: sealing interface
- 122: first sealing contour
- 124: first sealing contour
- 126: second sealing contour
- 128: second sealing contour
- 132: receptacle
- 134: rib
- 140: labyrinth
- 144: overmolded lip
- 150: fluid duct

## Claims

1. A plastics body (100) comprising a housing (110) and at least one inlay (112, 114) mounted in the housing (110),
where in a mounted state the housing (110) and the at least one inlay (112, 114) are configured to provide at least one internal fluid duct (150) inside the housing (110),
the housing (110) comprising at least two shells (106, 108),
where the at least one inlay (112, 114) comprises a first sealing contour (124) which is integral with the at least one inlay (112, 114) and at least one shell (106, 108) comprises a second sealing contour (126) which is integral with the at least one shell (106, 108) where the at least one inlay (112, 114) and the at least one shell (106, 108) are connected by a sealing interface (120),
where the sealing interface (120) is formed by the first sealing contour ( 124) and the second sealing contour (126) being in direct contact with each other, wherein the first sealing contour (124) being made of the same material as the at least one inlay (112, 114) and the second sealing contour (126) being made of the same material as the at least one shell (106, 108), wherein the sealing interface (120) is free of a gasket and/or an adhesive and/or a weld seam;
wherein the two shells (106,108) are connected by welding the shells (106,108) together;
**characterized in that** the sealing interface (120) comprises a labyrinth contour (140), and the sealing interface (120) comprises a rib (134) and a receptacle (132) for the rib (134).

2. The plastics body according to claim 1, wherein at least one of the sealing contours (124, 126) comprises an overmolded lip (144).

3. The plastics body according to any one of the preceding claims, wherein the shells (106, 108) and the at least one inlay (112, 114) are manufactured by injection molding.

4. Method for manufacturing a plastics body (100) according to any one of the preceding claims, comprising a housing (110) and at least one inlay (112, 114) mounted in the housing (110), where in a mounted state the housing (110) and the at least one inlay (112, 114) are configured to provide at least one internal fluid duct (150) inside the housing (110), comprising
- providing at least one inlay (112, 114) comprising a first sealing contour (124) being integral with the at least one inlay (112, 114);
- providing shells (106, 108) of the housing (110) providing a second sealing contour (126) being integral with at least one of the shells (106, 108); positioning the at least one inlay (112, 114) in at least one of the shells of the housing (100) or to another inlay (112, 114);
- connecting the at least one inlay (112,114) and the at least one shell (106,108) by the sealing interface (120);
- forming the sealing interface (120) by the first sealing contour (124) and the second sealing contour (126) being in direct contact with each other;
- the sealing interface (120) being free of a gasket and/or an adhesive and/or a weld seam;
- closing the shells (106, 108);
- connecting the two shells (106, 108) by welding the shells (106, 108) together.

## Patentansprüche

1. Kunststoffkörper (100), umfassend ein Gehäuse (110) und mindestens einen in dem Gehäuse (110) montierten Einsatz (112, 114),
wobei im montierten Zustand das Gehäuse (110) und der mindestens eine Einsatz (112, 114) so konfiguriert sind, dass sie mindestens eine interne Fluidleitung (150) innerhalb des Gehäuses (110) bilden,
wobei das Gehäuse (110) mindestens zwei Schalen (106, 108) umfasst,
wobei der mindestens eine Einsatz (112, 114) eine erste Dichtungskontur (124) umfasst, die einstückig mit dem mindestens einen Einsatz ausgebildet ist (112, 114) ist, und mindestens eine Schale (106, 108) eine zweite Dichtungskontur (126) aufweist, die einstückig mit der mindestens einen Schale (106, 108) ausgebildet ist, wobei der mindestens eine Einsatz (112, 114) und die mindestens eine Schale (106, 108) durch eine Dichtungsschnittstelle (120) verbunden sind,
wobei die Dichtungsschnittstelle (120) durch die erste Dichtungskontur (124) gebildet ist und die zweite Dichtungskontur (126) in direktem Kontakt miteinander stehen, wobei die erste Dichtungskontur (124) aus dem gleichen Material wie der mindestens eine Einsatz (112, 114) und die zweite Dichtungskontur (126) aus dem gleichen Material wie die mindestens eine Schale (106, 108) besteht, wobei die Dichtungsschnittstelle (120) frei von einer Dichtung und/oder einem Klebstoff und/oder einer Schweißnaht ist; wobei die beiden Schalen (106, 108) durch Verschweißen der Schalen (106, 108) miteinander verbunden sind;
**dadurch gekennzeichnet, dass** die Dichtungsschnittstelle (120) eine Labyrinthkontur (140) umfasst und die Dichtungsschnittstelle (120) eine Rippe (134) und eine Aufnahme (132) für die Rippe (134) umfasst.

2. Kunststoffkörper nach Anspruch 1, wobei mindestens eine der Dichtungskonturen (124, 126) eine umspritzte Lippe (144) umfasst.

3. Kunststoffkörper nach einem der vorhergehenden Ansprüche, wobei die Schalen (106, 108) und der mindestens eine Einsatz (112, 114) durch Spritzgießen hergestellt sind.

4. Verfahren zur Herstellung eines Kunststoffkörpers (100) nach einem der vorhergehenden Ansprüche, umfassend ein Gehäuse (110) und mindestens einen im Gehäuse (110) montierten Einsatz (112, 114), wobei im montierten Zustand das Gehäuse (110) und der mindestens eine Einsatz (112, 114) so konfiguriert sind, dass sie mindestens eine interne Fluidleitung (150) innerhalb des Gehäuses (110) bereitstellen, umfassend
- Bereitstellen mindestens eines Einsatzes (112, 114) umfassend eine erste Dichtungskontur (124), die einstückig mit dem mindestens einen Einsatz (112, 114) ausgebildet ist;
- Bereitstellen von Schalen (106, 108) des Gehäuses (110), die eine zweite Dichtungskontur (126) bereitstellen, die einstückig mit mindestens einer der Schalen (106, 108) ausgebildet ist;
- Positionieren des mindestens einen Einsatzes (112, 114) in mindestens einer der Schalen des Gehäuses (100) oder an einem anderen Einsatz (112, 114);
- Verbinden des mindestens einen Einsatzes (112, 114) und der mindestens einen Schale (106, 108) durch die Dichtungsschnittstelle (120);
- Bilden der Dichtungsschnittstelle (120) durch die erste Dichtungskontur (124) und die zweite Dichtungskontur (126), die in direktem Kontakt miteinander stehen;
- wobei die Dichtungsschnittstelle (120) frei von einer Dichtung und/oder einem Klebstoff und/oder einer Schweißnaht ist;
- Schließen der Schalen (106, 108);
- Verbinden der beiden Schalen (106, 108) durch Verschweißen der Schalen (106, 108) miteinander.

## Revendications

1. Corps en plastique (100) comprenant un boîtier (110) et au moins un insert (112, 114) monté dans le boîtier (110),
dans lequel, à l'état monté, le boîtier (110) et l'insert (112, 114), au moins au nombre d'un, sont configurés pour réaliser au moins un conduit de fluide interne (150) à l'intérieur du boîtier (110),
le boîtier (110) comprenant au moins deux enveloppes (106, 108),
dans lequel l'insert (112, 114), au moins au nombre d'un, comprend un premier contour d'étanchéité (124) fait d'un seul tenant avec l'insert (112, 114), au moins au nombre d'un, et au moins une enveloppe (106, 108) comprend un deuxième contour d'étanchéité (126) solidaire de l'enveloppe (106, 108), au moins au nombre d'une, dans lequel l'insert (112, 114), au moins au nombre d'un, et l'enveloppe (106, 108), au moins au nombre d'une, sont reliées par une interface d'étanchéité (120),
dans lequel l'interface d'étanchéité (120) est formée par le premier contour d'étanchéité (124) et le deuxième contour d'étanchéité (126) étant en contact direct l'un avec l'autre, dans lequel le premier contour d'étanchéité (124) est fait du même matériau que l'insert (112, 114), au moins au nombre d'un, et le deuxième contour d'étanchéité (126) est fait du même matériau que l'enveloppe (106, 108), au moins au nombre d'une, dans lequel l'interface d'étanchéité (120) est dépourvue d'un joint d'étanchéité et/ou d'adhésif et/ou de joint de soudure; dans lequel les deux enveloppes (106, 108) sont reliées par soudage des enveloppes (106, 108) entre elles;
**caractérisé en ce que** l'interface d'étanchéité (120) comprend un contour en labyrinthe (140), et l'interface d'étanchéité (120) comprend une nervure (134) et un réceptacle (132) pour la nervure (134).

2. Corps en plastique selon la revendication 1, dans lequel au moins l'un des contours d'étanchéité (124, 126) comprend une lèvre surmoulée (144).

3. Corps en plastique selon l'une quelconque des revendications précédentes, dans lequel les enveloppes (106, 108) et l'insert (112, 114), au moins au nombre d'un, sont fabriqués par un processus de moulage par injection.

4. Procédé de fabrication d'un corps en plastique (100) selon l'une quelconque des revendications précédentes, comprenant un boîtier (110) et au moins un insert (112, 114) monté dans le boîtier (110), dans lequel, à l'état monté, le boîtier (110) et l'insert (112, 114), au moins au nombre d'un, sont configurés pour fournir au moins un conduit de fluide interne (150) à l'intérieur du boîtier (110), comprenant
- fournir au moins un insert (112, 114) comprenant un premier contour d'étanchéité (124) fait d'un seul tenant avec l'insert (112, 114), au moins au nombre d'un;
- fournir des enveloppes (106, 108) du boîtier (110) fournissant un deuxième contour d'étanchéité (126) qui est fait d'un seul tenant avec au moins une des coques (106, 108);
- positionner l'insert (112, 114), au moins au nombre d'un, dans au moins une des enveloppes du boîtier (100) ou sur un autre insert (112, 114);
- relier l'insert (112, 114), au moins au nombre d'un, et la coque (106, 108), au moins au nombre d'une, par le truchement de l'interface d'étanchéité (120);
- former l'interface d'étanchéité (120) par le truchement du premier contour d'étanchéité (124) et du deuxième contour d'étanchéité (126) en contact direct l'un avec l'autre;
- l'interface d'étanchéité (120) étant dépourvue de joint d'étanchéité et/ou d'adhésif et/ou de joint de soudure;
- fermer les enveloppes (106, 108);
- relier les deux enveloppes (106, 108) en soudant les enveloppes (106, 108) ensemble.
